# EUROPÄISCHE PATENTSCHRIFT

(11) **EP 0 548 316 B1**
(45) Veröffentlichungstag und Bekanntmachung des Hinweises auf die Patenterteilung: **17.01.1996**
(21) Anmeldenummer: 92914657.9
(22) Anmeldetag: 10.07.1992
(51) Int. Cl.: D21G 1/02, F16C 13/00

(54) **HYDROSTATISCH GESTÜTZTE DURCHBIEGUNGSAUSGLEICHSWALZE, INSBESONDERE FÜR PAPIERMASCHINEN**
HYDROSTATICALLY SUPPORTED SAG-COMPENSATION ROLLER, IN PARTICULAR FOR PAPER-MANUFACTURING MACHINES
CYLINDRE DE COMPENSATION DE FLEXION SOUTENU HYDROSTATIQUEMENT, EN PARTICULIER POUR MACHINES A PAPIER

(30) Priorität: 12.07.1991 DE 4123115
(43) Veröffentlichungstag der Anmeldung: 30.06.1993
(73) Patentinhaber: J.M. Voith GmbH, D-89522 Heidenheim (DE)
(72) Erfinder: SCHIEL, Christian, D-7920 Heidenheim (DE)
(74) Vertreter: Weitzel, Wolfgang, Dr.-Ing. Patentanwalt
(86) Internationale Anmeldenummer: EP9201562
(87) Internationale Veröffentlichungsnummer: WO9301351

(56) Entgegenhaltungen:
- DE-A- 2 502 161
- DE-A- 3 024 575
- DE-A- 3 528 333
- DE-U- 8 911 309
- FR-A- 2 373 639
- FR-A- 2 450 379
- GB-A- 2 011 555
- GB-A- 2 041 161

## Beschreibung

Die Erfindung betrifft eine Durchbiegungsausgleichswalze zur Behandlung einer laufenden Bahn, z.B. Papierbahn, mit den im Oberbegriff des Anspruches 1 angegebenen Merkmalen. Es handelt sich also um eine Walze mit einem drehbaren Walzenmantel, und mit einem stationären Joch sowie mit wenigstens einem radial verschiebbaren länglichen Anpreßschuh, der zum Übertragen einer Preßkraft vom Walzenmantel auf das Joch dient.

Der Anpreßschuh besitzt Drucktaschen, die von umgebenden, der Kontur der Innenfläche des Walzenrohres angepaßten Stegflächen begrenzt sind. Durch einen in die Drucktaschen geförderten Ölstrom wird erreicht, daß ein Spalt zwischen Mantel und Stegflächen entsteht, durch den das Öl abströmt.

Bekannt sind Walzen z.B. mit einer Vielzahl von über die Bahnbreite (=Walzenlänge) verteilten Anpreßschuhen z.B. nach DE 22 45 597 = US 3,846,883. Andere bekannte Walzen haben nur wenige, im Extremfall nur einen einzigen länglichen Anpreßschuh, der sich parallel zur Walzenachse erstreckt, z.B. nach US 3,802,044 (Fig. 6 und 7) oder nach der DE 25 02 161 = GB 1506801 (Akte P 3361). In der letzteren Ausgestaltung wird der die Drucktaschen enthaltende Anpreßschuh von einem Kolben über eine Gelenkleiste gegen den Walzenmantel gedrückt. Der Anpreßschuh enthält eine lange, relativ breite Zentraltasche, die beidseitig von schmalen Positioniertaschen umgeben ist.

Die Positioniertaschen sind durch Zwischenstege in der Längsrichtung in mehrere Abschnitte unterteilt. In jeden dieser Abschnitte mündet eine von der Zentraltasche ausgehende Kapillare, durch die Ölmengen fließen, welche die Spaltweite zwischen den Stegen und dem Walzenmantel bestimmen. Die auf den Walzenmantel ausgeübte innere Linienkraft wird durch das Produkt Kolbenbreite mal Hydraulikdruck auf den Kolben bestimmt.

Ein Nachteil solcher Hydrostatikwalzen gegenüber der konventionellen S-Walze (gemäß DE 11 93 739 = US 3,196,520) oder einer Walze mit Gleitlagerschuh (gemäß DE 21 65 118 = US 3,726,338) ist, daß das Druckmittel (Öl) ständig durch die Kapillaren und Spalte entweicht. Dadurch wird ein höherer Leistungsverbrauch zur Förderung des immer wieder abfließenden Drucköls erforderlich, weil die Leistung proportional mit dem Produkt aus dem hydraulischen Pumpendruck und dem Förderstrom ansteigt.

Ein anderer Nachteil, der besonders bei hoher Laufgeschwindigkeit zu Buche schlägt, ist der Leistungsverlust infolge der Scherkräfte im Öl im Bereich der engen Spalte zwischen dem Walzenmantel und den Stegen der Hydrostatikelemente.

Man hat schon versucht, beide Leistungsverbräuche (Blindleistung) zu reduzieren, z.B. durch Wahl eines dünnflüssigeren Öls und engerer Spalte. Dabei werden dann die Kapillaren so klein, daß sie durch sporadisch auftretende Schmutzteilchen verstopfen. Auch kann es zum Anstreifen der Stege am Walzenmantel kommen.

Aus diesen Gründen hat man sich daran gewöhnt, seit Einführung der hydrostatischen Durchbiegungsausgleichswalzen vor ca. 20 Jahren, die Stegbreiten groß und die Drücke hoch zu machen bei Verwendung eines Öles hoher Viskosität, z.B. VG 150 oder VG 220. Dadurch war es möglich, die Ölmengen bei genügend großen Kapillaren und Spaltweiten zu begrenzen, aber man mußte eine relativ hohe innere Reibung in Kauf nehmen.

Es ist die Hauptaufgabe der vorliegenden Erfindung, eine hydrostatisch arbeitende Durchbiegungsausgleichswalze so neuzugestalten, daß die Blindleistung (= Pumpenaustrittsleistung plus Leistungsverlust durch innere Reibung) auf einen Bruchteil der heute üblichen Werte gesenkt wird.

Weitere Aufgaben sind einfache kostensparende Konstruktion und gleiche Temperaturverteilung über die Bahnbreite. Außerdem muß für eine einwandfreie Funktion aller Teile gesorgt werden, insbesondere müssen die Hydrostatikelemente in allen Einbaulagen relativ zur Schwerkraftrichtung funktionieren.

Es ist auch wichtig, daß sich der Anpreßschuh bei Belastung möglichst wenig durchbiegt, so daß sich die Spaltweiten an den (die Drucktaschen begrenzenden) Stegen möglichst wenig verändern.

Außerdem soll der Anpreßschuh den Jochquerschnitt so wenig wie möglich schwächen, damit der Walzendurchmesser nicht unnötig groß gemacht werden muß (Kosten, Gewicht).

Schließlich soll der Anpreßschuh thermisch stabil sein, d.h. er darf durch ungleiche Erwärmung der Stege über die Breite nicht krumm werden als Resultat akzellerierender Erwärmung in den Zonen kleiner werdender Spaltweiten.

Die Hauptaufgabe wird durch die Merkmale des Anspruches 1 gelöst.

Erfindungsgemäß wird die aus den Drucktaschen entweichende Durckmittelmenge (und somit die Pumpenantriebsleistung) durch die folgenden Maßnahmen relativ klein gehalten: Es wird - anstelle einer großen Anzahl kleiner Anpreßschuhenur ein einziger länglicher Anpreßschuh verwendet oder es werden nur wenige, eine Reihe bildende längliche Anpreßschuhe vorgesehen, die sich im wesentlichen parallel zur Walzenachse erstrecken. Hierdurch wird das Verhältnis zwischen der Gesamtlänge der Stege und der Summe der Drucktaschen-Flächen relativ klein gehalten. Eine weitere Maßnahme zur Verminderung der Pumpenantriebsleistung besteht darin, daß die wirksame Breite des Druckraumes - im Verhältnis zum Innendurchmesser des Walzenmantels - ungewöhnlich groß ist, so daß man mit einem relativ niedrigen Druckmitteldruck auskommt. In diesem Zusammenhang ist es aber wichtig, die Gesamtbreite des Anpreßschuhes möglichst klein zu halten; erfindungsgemäß beträgt diese Gesamtbreite höchstens das 1,3-fache der wirksamen Breite des Druckraumes. Hierdurch wird berücksichtigt, daß der Anpreßschuh - infolge der großen wirksamen Breite des Druckraumes - eine im wesentlichen plattenförmige Gestalt erhält. Es ist nun wichtig, daß der Anpreßschuh trotz dieser plattenförmigen Gestalt - im Querschnitt gesehen - unter Last keine (oder nur eine extrem geringe) Durchbiegung erleidet. Zur Lösung dieser Teilaufgabe dient die schon erwähnte Begrenzung der Gesamtbreite des Anpreßschuhes und eine hydraulische Stützung der dem Joch zugekehrten Unterseite des Anpreßschuhes (wie weiter unten im einzelnen erläutert wird). Als Ergebnis dieser Maßnahmen kann erwartet werden, daß die Maßhaltigkeit aller Spalte zwischen den Stegen und dem Walzenmantel während des Betriebes mit hoher Genauigkeit erhalten bleibt, und zwar auch bei relativ großen Änderungen der Linienkraft.

Entscheidend ist außerdem die sehr geringe Breite der Stege, wodurch die innere Verlustreibung der Walze verringert wird.

Das überraschende Ergebnis, daß trotz extremer Verringerung der Stegbreite keine höhere Pumpenleistung erforderlich ist, beruht im Rückblick betrachtet darauf, daß bei gleicher Stegbreite und Spaltweite v̇∼p ist (laminare Strömung) und die Leistung P∼p x v̇, also P∼p ! (P = Pumpenleistung, p = Pumpendruck, v̇ = Förderstrom) Z.B. durch Vergrößerung der Kolbenfläche auf das dreifache geht bei gleicher Linienkraft der erforderliche Druck auf 1/3 zurück und die notwendige Pumpenleistung auf 1/9, wenn die Stegbreiten gleich groß bleiben.

Es ist aber auch möglich, bei gleicher Pumpenleistung die Stegbreite auf 1/9 des früheren Wertes zu reduzieren mit entsprechend drastisch verringerter innerer Reibleistung.

Durch eine solche zunächst widersinnig erscheinende Formgebung des hydrostatischen Anpreßschuhs ist also tatsächlich eine enorme Verringerung der Blindleistung einer hydrostatisch gestützten Durchbiegungsausgleichswalze möglich.
Mit anderen Worten: Sowohl die Pumpenleistung als auch die Leistung zum Antrieb der Walze können drastisch verringert werden.

Die obenerwähnte hydraulische Stützung der Unterseite des Anpreßschuhes ist auf unterschiedlicher Weise realisierbar: Falls der Anpreßschuh mittels einer Gelenkleiste mit einem separaten Kolben verbunden ist, wird erfindungsgemäß zwischen dem Anpreßschuh und dem Kolben ein zum übrigen Walzeninnenraum abgedichteter Zwischenraum vorgesehen, in dem ungefähr derselbe Druck herrscht wie im Druckraum. Abweichend hiervon kann aber die erfindungsgemäße Konstruktion dadurch wesentlich vereinfacht werden, daß der Anpreßschuh und der Kolben ein einstückiges Bauteil bilden; mit anderen Worten: Der Anpreßschuh ist zugleich als Kolben ausgebildet. In diesem Fall ist die hydraulische Stützung der Unterseite des Anpreßschuhes durch den im Druckraum herrschenden Druck gewährleistet. In allen Fällen wird erreicht, daß durch eine wenigstens angenäherte Druck-Gleichheit auf beiden Seiten (Ober- und Unterseite) des Anpreßschuhes eine Durchbiegung des relativ breiten Schuhes vermieden wird.

Die Kippbarkeit des einstückigen, zugleich als Kolben ausgebildeten Anpreßschuhes wird durch kurze Führungslänge und Kolbenbett im Bereich der Längsdichtung erreicht. Die Abdichtung kann entweder durch elastische Dichtlippen oder durch starre Leisten z.B. gemäß DE 35 03 371 = US 4,651,628 (Akte P 4183) erfolgen, wobei insbesondere auf den großen Hub der Stirndichtung zu achten ist.

Bevorzugt wird die Bauart des Anpreßschuhes mit breiter Mittelkammer und schmalen äußeren Hydrauliktaschen (DE 25 02 161). Diese Bauart ist besonders vorteilhaft bei großer Schuhbreite, weil sie weniger empfindlich hinsichtlich Spaltänderungen über den einzelnen Längsstegen ist als eine Bauart mit einem Mittelsteg und zwei äußeren Stegen.

Eine weitere Reduzierung der Blindleistung wird dadurch erreicht, daß die inneren Stege zwischen Mittelkammer und Hydrostatiktaschen schmäler gemacht werden als die äußeren Stege. Dies kann geschehen, weil die Druckdifferenz und damit der Öldurchfluß über diese Stege klein ist.

In einer bevorzugten Ausführung sind die äußeren Stege etwa um das 1,5- bis 2,5-fache breiter als die inneren Stege.

Weiterhin sind auch an den Stirnseiten eines Anpreßschuhs hydrostatische, über Kapillaren mit Öl versorgte Drucktaschen vorgesehen. Auf diese Weise wird dafür gesorgt, daß die dort in einer Ringzone auftretende höhere Reibleistung nicht zu örtlicher Erwärmung führt. Die Reibungswärme wird vom Hydrostatiköl weggespült. Diese stirnseitigen Leisten sind ähnlich schmal wie die Längsleisten.

Einerseits soll der Anpreßschuh nicht zu klobig und schwer sein, andererseits jedoch ist eine genügende Biegesteifigkeit notwendig. Der im wesentlichen plattenförmige Anpreßschuh soll, um den an ihn gestellten Forderungen gerecht zu werden, mindestens im Bereich seiner Mittelachse eine Dicke haben, die das 0,15- bis 0,3-fache der Breite beträgt. Damit ist einerseits erreicht, daß das Joch nicht zu sehr geschwächt wird und andererseits, daß die für die genaue Spalteinhaltung erforderliche Steifigkeit gegeben ist. Über die Bahnbreite (also über seine Länge) ist der Anpreßschuh dann noch genügend elastisch, um sich unter der Wirkung der Hydrostatikkräfte parallel an den Walzenmantel anzupassen.

Es ist außerdem vorteilhaft, die Hydrostatiktaschen in auf den Anpreßschuh aufschraubbare Leisten einzuarbeiten. Das gilt sowohl für die Längsleisten als auch für die kreissegmentartig geformten stirnseitigen Leisten.

Um thermisches Verbiegen zu minimieren, wird eine Isolierschicht zwischen Anpreßschuh und Leiste eingefügt. Diese Isolierschicht ist etwa 1 bis 5 mm dick. Sie kann aus Kunststoff oder harzgebundenen Gewebeschichten bestehen.

Der Hauptteil des Anpreßschuhes wird bevorzugt aus Stahl gefertigt, die aufgeschraubten Leisten aus einem Material mit guten Gleiteigenschaften gegenüber dem aus Stahl oder Gußeisen hergestellten Walzenmantel.

Preßt der Anpreßschuh beispielsweise nach oben, dann sind besondere Anpreßmittel vorzusehen, die ihn aus seiner Ruhelage in die Arbeitsstellung in Tuchfühlung mit dem Walzenmantel bringen. Dies geschieht nach einer weiteren Ausgestaltung der Erfindung durch vom Hydraulikdruck unabhängige Anpreßmittel, beispielsweise durch vorgespannte Federn.

Baut man die beschriebene Anpreßanordnung in eine äquidistant gelagerte Walze (gemäß DE 30 24 575 = US-Re 32,586; Akte P 3795) ein, die auch noch gleiche Lagerentfernung mit der Gegenwalze haben kann, sind mehrere hydraulische Druckzonen über die Bahnbreite in der Regel überflüssig. Damit wird die Anpreßeinrichtung einfach und billig, weil nur ein einziger Anpreßschuh erforderlich ist, der sich über die gesamte Bahnbreite erstreckt.

Baut man die beschriebene Anpreßanordnung in eine selbstanpressende Walze (gemäß DE 36 23 028 = US 4,691,421 Akte P 4285) ein, dann werden in der Regel mehrere über die Bahnbreite verteilte Anpreßschuhe und an den Walzenenden Gegen-Anpreßschuhe vorgesehen.

Die Erfindung ist anhand der Figuren 1-7 näher erläutert.
- Figur 1: ist ein Teilquerschnitt durch eine Durchbiegungsausgleichswalze mit hydrostatischer Anpreßanordnung.
- Figur 2: ist eine Ansicht der Anordnung von Figur 1 in Pfeilrichtung R.
- Figur 3: ist ein Querschnitt durch eine andere Anpreßanordnung.
- Figur 4: ist eine Alternative zu Figur 3.
- Figur 5: ist ein Längsschnitt entlang der Schnittlinie V-V in Figur 4.
- Figur 6: ist ein schematischer Längsschnitt durch eine äquidistant gelagerte Durchbiegungsausgleichswalze.
- Figur 7: ist ein schematischer Längsschnitt durch eine selbstanpressende Durchbiegungsausgleichswalze.

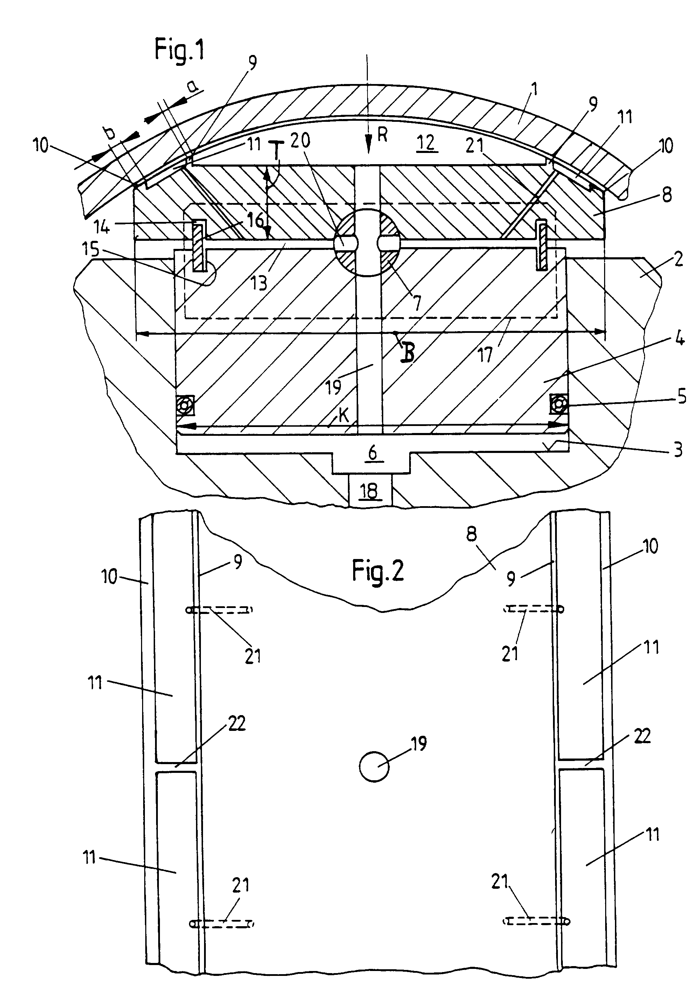

In Figur 1 bedeutet 1 einen drehbar gelagerten Walzenmantel, der von einem feststehenden Joch 2 durchdrungen wird. In das Joch 2 ist ein längliches Bett 3 eingearbetet, in dem sich ein länglicher Kolben 4 auf und ab bewegen kann. In den Kolben 4 sind elastische Dichtungen 5 eingebaut, die den Druckraum 6 nach außen abdichten. Dessen wirksame Breite K beträgt etwa das 0,4-fache des Walzenmantel-Innendruckmessers.

Auf einem länglichen, in den Kolben 4 gebetteten Gelenkbolzen 7 ist ein Anpreßschuh 8 (nachfolgend "Formstück" genannt) kippbar gelagert. Dessen Gesamtbreite B beträgt etwa das 1,2-fache der Breite K des Druckraumes 6, seine Dicke T etwa das 0,16-fache der Breite B. Das Formstück 8 trägt zwei innere Längsstege 9 und zwei äußere Längsstege 10, die zwischen sich Hydrostatiktaschen 11 bilden. Zwischen den Stegen 9 befindet sich eine Mittelkammer 12, in der im wesentlichen der gleiche Druck wie im Druckraum 6 herrscht. Die Breite a der inneren Längsstege 9 beträgt ca. 1/80 und die Breite b der äußeren Längsstege 10 ca. 1/40 der Breite K des Druckraumes 6.

Zwischen dem Kolben 4 und dem Formstück 8 befindet sich ein weiterer Druckraum 13, der längsseitig durch in Nuten 14 und 15 gehaltene Dichtleisten 16 und stirnseitig durch Dichtplatten 17 (gestrichelt) abgedichtet ist.

Durch eine Zuführleitung 18 gelangt Druckmittel in den Druckraum 6 und über eine oder mehrere (den Kolben 4, Gelenkbolzen 7 und Formstück 8 durchdringende) Bohrungen 19 in die Mittelkammer 12. Über Querbohrungen 20 im Gelenkbolzen 7 gelangt das Druckmittel auch in den Druckraum 13 und von diesem durch die Kapillarbohrungen 21 in die Hydrostatiktaschen 11.

Sobald der Druck in den Hydrostatiktaschen 11 ein bestimmtes Maß erreicht hat, bei dem die Summe der hydraulischen Kräfte zwischen Walzenmantel 1 und Formstück 8 der hydraulischen Kraft des Druckmittels im Raum 6 auf den Kolben 4 entspricht, bildet sich ein ölgefüllter Spalt zwischen Walzenmantel 1 und den Stegen 9, 10 des Formstückes 8. Dadurch ist ein verschleißfreier Lauf des Mantels 1 gewährleistet. Der Walzenmantel 1 kann sich entweder im oder gegen den Uhrzeiger drehen. An beiden Enden ist der Walzenmantel 1 durch nicht gezeigte Wälzlager in bekannter Weise relativ zum Joch 2 positioniert.

In Figur 2 erkennt man das Formstück 8, die Längsleisten 9 und 10 sowie benachbarte Hydrostatiktaschen 11 trennende Querstege 22. Außerdem mündet in jede Hydrostatiktasche eine Kapillare 21. Die Ölzusetzung erfolgt durch die Bohrung 19.

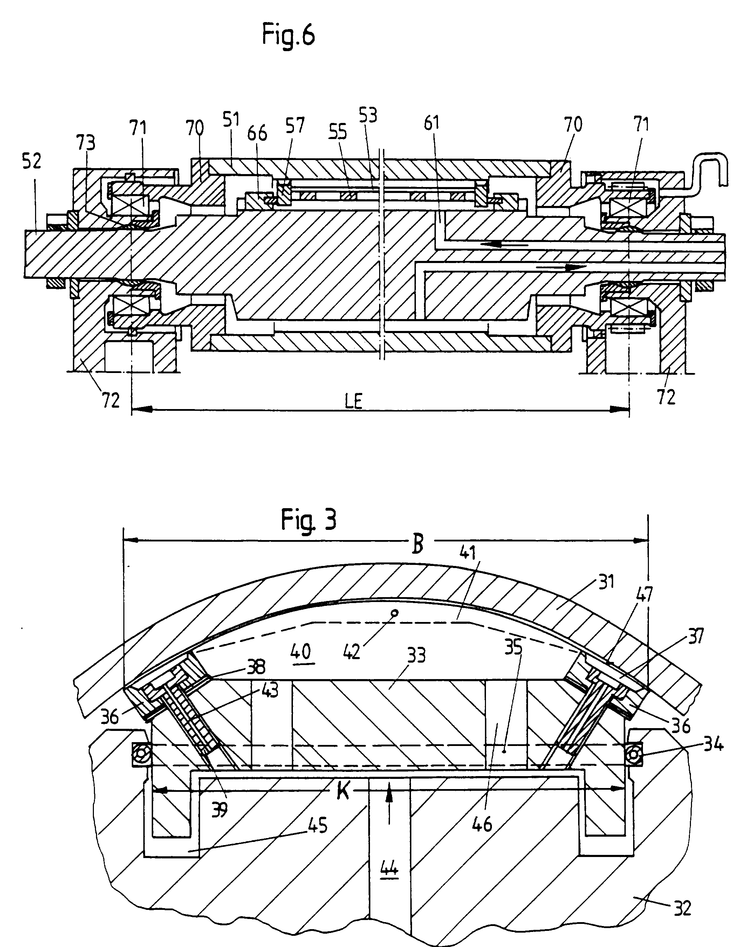

In Figur 3 befindet sich innerhalb eines drehbar gelagerten Walzenmantels 31 ein feststehendes Joch 32. Im Joch 32 ist ein Anpreßschuh 33 gelagert, der auch die Funktion eines Kolbens hat und der senkrecht beweglich und gegenüber dem Joch 32 durch elastische Dichtungen 34 abgedichtet ist. Dichtungen befinden sich auch stirnseitig zwischen Joch 32 und Anpreßschuh 33, wie gestrichelt bei 35 angedeutet. Dichtleisten 36 mit eingearbeiteten Hydrostatiktaschen 37 sind unter Zwischenschaltung einer Isolierstoffplatte 38 mittels Schrauben 39 auf den Anpreßschuh 33 aufgeschraubt.

Dichtleisten 40 sind an beiden Enden auf den Anpreßschuh 33 aufgeschraubt. Auch in diese Dichtleisten 40 sind Hydrostatiktaschen 41 (gestrichelt) eingearbeitet, die über Kapillaren 42 mit Druckmittel versorgt werden. Die Hydrostatiktaschen 37 werden durch Kapillarbohrungen 43 (in einigen der Befestigungsschrauben 39) mit Druckmittel beschickt. Das Druckmittel gelangt durch die Zuführbohrung 44 in den Druckraum 45 und über Öffnungen 46 bis an den Walzenmantel 31. Die Gesamtbreite B des Anpreßschuhes 33 ist etwa das 1,1-fache der wirksamen Breite K des Druckraumes 45. Die Hydrostatiktaschen 37 sind, ähnlich wie in Figur 2, durch Zwischenstege 47 über die Bahnbreite in mehrere Abschnitte unterteilt.

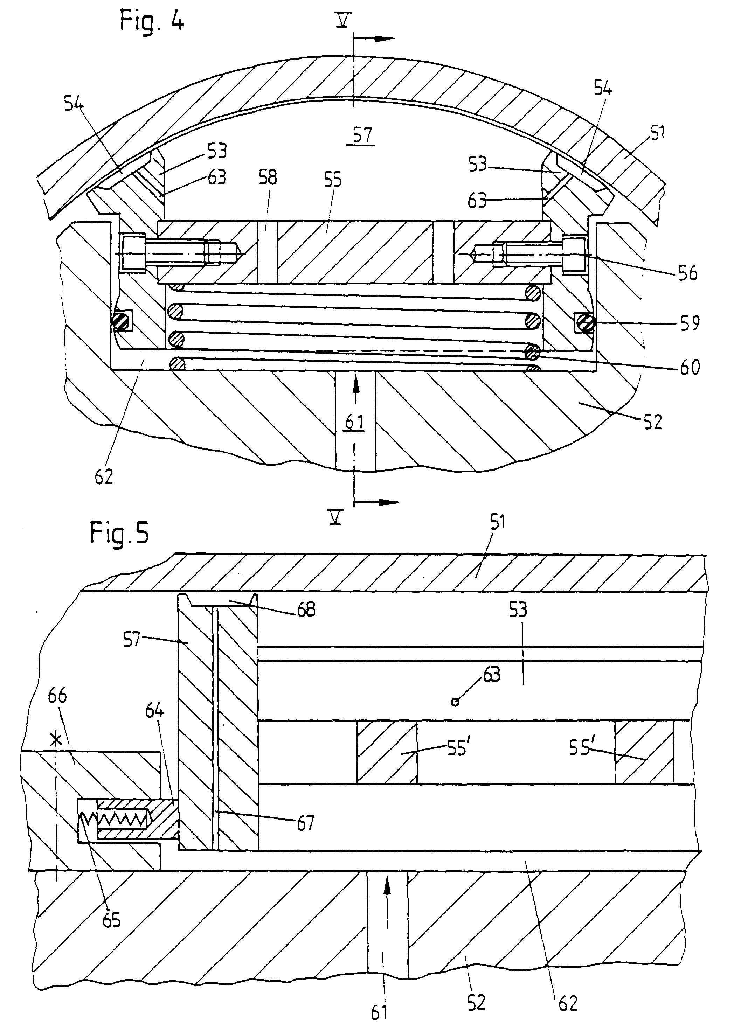

In Figur 4 sind wieder ein drehbar gelagerter Walzenmantel 51 und ein Joch 52 im Teilschnitt zu sehen.

Dichtleisten 53 mit eingearbeiteten Hydrostatiktaschen 54 sind durch eine Zwischenplatte 55 und Schrauben 56 verbunden. Stirndichtplatten 57 sind ebenfalls mit nicht gezeigten Verbindungsschrauben an die Dichtleisten 53 angeschraubt. Die Zwischenplatte 55 hat entweder Druckmittelbohrungen 58 oder besteht aus mehreren Teilen, mit Zwischenräumen.
Dichtungen 59 verhindern einen Druckmittelaustritt zwischen Joch 52 und Dichtleisten 53.

Federn 60 drücken den aus den Teilen 53 bis 56 bestehenden Anpreßschuh gegen den Walzenmantel 51.

Die Federkraft der Federn 60 ist so bemessen, daß sie das Eigengewicht der Teile 53-56 kompensiert und die Dichtungsreibung überwindet.

Durch eine Druckmittelleitung 61 gelangt Druckmittel in den Druckraum 62 und über Kapillarbohrungen 63 in die Hydrostatiktaschen 54.

In Figur 5 erkennt man wieder den drehbar gelagerten Walzenmantel 51, das Joch 52, Dichtleiste 53 und Stirndichtung 57, sowie die Zwischenplatte 55, ausgeführt in Form einzelner Vierkantstäbe 55'.

In einem am Joch 52 befestigten Dichtleistenhalter 66 ist eine horizontal bewegliche Stirndichtleiste 64 geführt. Sie wird durch Federn 65 gegen die Stirndichtung 57 gedrückt. Das Druckmittel gelangt durch die Zuleitung 61 in den Druckraum 62 und durch Kapillaren 63 in die nicht sichtbaren Hydrostatiktaschen 54 der Längsdichtleisten 53 und über Kapillaren 67 in die Hydrostatiktaschen 68.

Alternativ zu den in Figur 4 gezeigten Federn 60 kann das erste Anheben der Anpreßeinheit auch durch fluidischen Druck erfolgen z.B. dadurch, daß man bei Inbetriebnahme die Bohrung 19 Figur 1 kurzzeitig verkleinert oder verschließt unter Zuhilfenahme eines zeitgesteuerten Ventils oder ähnliches.

Alternativ wären zu diesem Zweck auch getrennte Ölzuführungen in die Räume 6 und 12 der Figur 1 denkbar. Auch die Räume 13 könnten alternativ statt über die Bohrungen 19 und 20 durch Direktbohrungen mit dem Druckraum 6 verbunden sein.

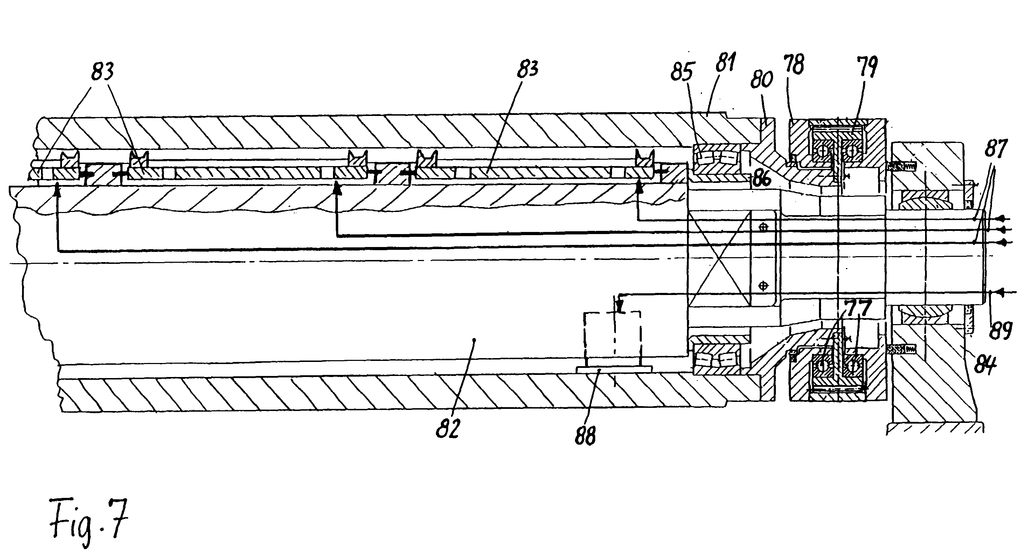

Die Figur 6 zeigt eine äquidistant gelagerte Durchbiegungseinstellwalze, die weitgehend derjenigen gemäß Fig. 4 und 5 entspricht. Es ist ein einziger länglicher Anpreßschuh vorhanden, von dem die Teile 53, 55' und 57 sichtbar sind.

Der Walzenmantel 51 hat an beiden Enden je einen Lagerhals 70, der mittels Wälzlager 71 in einem Abstützbock 72 gelagert ist. Das stationäre Joch 52 ruht mittels kugeliger Büchsen 73 ebenfalls in den Abstützböcken 72. Die Entfernung LE zwischen den Mittelebenen der Wälzlager 71 und der Büchsen 73 ist gleich. Die übrigen Einzelheiten sind mit den gleichen Bezugszahlen versehen wie die entsprechenden Teile der Fig. 4 und 5.

Die Figur 7 zeigt eine von Fig. 6 abweichende Durchbiegungseinstellwalze. Sie umfaßt einen drehbaren Walzenmantel 81, ein stationäres Joch 82 und mehrere, in einer Reihe angeordnete längliche Anpreßschuhe 83. Mit dem Walzenmantel 81 rotiert ein Antriebsring 80 und ein daran befestigter Zahnkranz 79, der mit einem nicht sichtbaren Antriebsritzel kämmt. Ein Getriebegehäuse 78 ist mit Hilfe von Wälzlagern 77 am Zahnkranz 79 gelagert. Das Joch 82 ruht in einem Abstützbock 84. Der Walzenmantel 81 ist mit Hilfe eines Wälzlagers 85 auf einer sogenannten Kulisse 86 gelagert. Diese ist nicht drehbar, aber relativ zum Joch 82 in radialer Richtung verschiebbar. Somit kann der Walzenmantel 81 (zusammen mit den genannten Elementen 77-80) relativ zum Joch in radialer Richtung verschoben worden. Sie kann z.B. von einer nicht dargestellten Gegenwalze abgehoben und wieder an diese angelegt und angepreßt werden. Es handelt sich in Fig. 7 also um eine sogenannte selbstanpreßende Walze. Das in Fig. 7 nicht sichtbare Ende der Walze ist im wesentlichen gleich ausgebildet wie das sichtbare Ende; es fehlen nur die Antriebselemente 77 bis 79. Abweichend von Fig. 6 ist die Entfernung zwischen den Wälzlagern 85 des Walzenmantels 81 wesentlich kleiner als die Entfernung zwischen den Lagern des Jochs 82 in den Abstützböcken 84. Deshalb ist es vorteilhaft, jeden Anpreßschuh 83 über separate Druckleitungen 87 mit unterschiedlichen Drücken zu beauflagen. Außerdem ist an jedem Walzenende wenigstens ein Gegen-Anpreßschuh 88 vorgesehen, der über eine zusätzliche Druckleitung 89 mit Druck beaufschlagt wird.

## Patentansprüche

1. Durchbiegungsausgleichswalze, insbesonders für Papiermaschinen, mit den folgenden Merkmalen:
a) durch das Innere eines drehbaren Walzenmantels (1) erstreckt sich ein stationäres Joch (2);
b) zwischen Walzenmantel (1) und Joch (2) befindet sich wenigstens ein länglicher und sich parallel zur Walzenachse erstreckender Anpreßschuh (8; 33; 53-57) dessen Außenkontur der Innenfläche des Walzenmantels angepaßt ist und der relativ zum Joch radial beweglich sowie um seine Längsachse kippbar ist;
c) zur Übertragung einer Preßkraft vom Walzenmantel (1) auf das Joch (2) hat der Anpreßschuh in seiner Außenkontur hydrostatische Drucktaschen (11, 12); außerdem ist zwischen Anpreßschuh und Joch ein Druckraum (6; 45; 62) vorgesehen;
gekennzeichnet durch die folgenden Merkmale:
d) die wirksame Breite (K) des Druckraumes (6; 45; 62) beträgt mindestens das 0,2-fache des Innendurchmessers des Walzenmantels (1);
e) die Gesamtbreite (B) des Anpreßschuhes (8; 33; 53-57) beträgt höchstens das 1,3-fache der wirksamen Breite (K) des Druckraumes;
f) die dem Joch (2) zugekehrte Unterseite des Anpreßschuhes (8; 33; 53-57) ist hydraulisch gestützt;
g) die Längsstege (9, 10), welche die Drucktaschen (11, 12) begrenzen, haben eine Breite (a, b) von höchstens 1/20 der wirksamen Breite (K) des Druckraumes (6; 45; 62).

2. Durchbiegungsausgleichswalze nach Anspruch 1, dadurch gekennzeichnet, daß die wirksame Breite (K) des Druckraumes (6; 45; 62) das 0,25- bis 0,5-fache des Innendurchmessers des Walzenmantels (1) beträgt.

3. Durchbiegungsausgleichswalze nach Anspruch 1 oder 2, dadurch gekennzeichnet, daß die Breite (a, b) der Längsstege (9, 10) 1/30 bis 1/100 der Breite (K) des Druckraumes (6; 45; 62) beträgt.

4. Durchbiegungsausgleichwalze nach Anspruch 1, 2 oder 3, gekennzeichnet durch die folgenden Merkmale:
a) der Anpreßschuh (8) ist mittels einer Gelenkleiste (7) mit einem separaten Kolben (4) verbunden, der den Druckraum (6) gegen den übrigen Walzeninnenraum begrenzt;
b) zwischen Anpreßschuh (8) und Kolben (4) ist ein zum übrigen Walzeninnenraum abgedichteter Zwischenraum (13) vorhanden, in dem zumindest angenähert derselbe Druck herrscht wie im Druckraum (6).

5. Durchbiegungsausgleichswalze nach Anspruch 1, 2 oder 3, dadurch gekennzeichnet, daß der Anpreßschuh (33) zugleich als Kolben ausgebildet ist, der den Druckraum (45) gegen den übrigen Walzeninnenraum begrenzt und um eine gedachte Längsachse im Druckraum (45) kippbar ist.

6. Durchbiegungsausgleichswalze nach einem der Ansprüche 1 bis 5 dadurch gekennzeichnet, daß beiderseits einer im wesentlichen maschinenbreiten Mittelkammer (12) maschinenbreite, schmale und über Kapillaren (21) mit Öl gespeiste Drucktaschen (11) angeordnet sind.

7. Durchbiegungsausgleichswalze nach Anspruch 6, dadurch gekennzeichnet, daß die Breite (b) der äußeren Stege (10) zwischen Drucktaschen (11) und Walzeninnenraum größer ist als die Breite (a) der inneren Stege (9) zwischen Drucktaschen (11) und Mittelkammer (12).

8. Durchbiegungsausgleichswalze nach Anspruch 7, dadurch gekennzeichnet, daß die äußeren Stege (10) etwa doppelt so breit sind wie die inneren Stege (9).

9. Durchbiegungsausgleichswalze nach einem der Ansprüche 1 bis 8, dadurch gekennzeichnet, daß auch an den Stirnseiten über Kapillaren (67) mit Öl gespeiste Drucktaschen (68) vorgesehen sind.

10. Durchbiegungsausgleichswalze nach einem der Ansprüche 1 bis 9, dadurch gekennzeichnet, daß der Anpreßschuh (8; 33) ein überwiegend plattenförmiges Teil aufweist mit einem Dicken- zu Breitenverhältnis (T/B), im Querschnitt gesehen von 0,15 bis 0,33.

11. Durchbiegungsausgleichswalze nach einem der Ansprüche 1 bis 10, dadurch gekennzeichnet, daß Drucktaschen (37; 54) enthaltende Leisten (36; 53) auf einen länglichen Tragkörper (33; 55) aufgeschraubt sind.

12. Durchbiegungsausgleichswalze nach Anspruch 11, dadurch gekennzeichnet, daß zwischen den Leisten (36) und dem Tragkörper (33) eine Isolierschicht (38) eingebaut ist.

13. Durchbiegungsausgleichswalze nach Anspruch 11 oder 12, dadurch gekennzeichnet, daß der Tragkörper (33; 55) aus Stahl und die Leisten (36; 53) aus einem Material mit besseren Gleiteigenschaften gegenüber Stahl oder Gußeisen bestehen.

14. Durchbiegungsausgleichswalze nach einem der Ansprüche 1 bis 13, dadurch gekennzeichnet, daß Anpreßmittel (z.B. Federn 60) vorgesehen sind, die den Schuh (53-56) auch in drucklosem Zustand entgegen der Schwerkraft gegen den Walzenmantel (51) drücken.

15. Durchbiegungsausgleichswalze nach einem der Ansprüche 1 bis 14, dadurch gekennzeichnet, daß sie als eine äquidistant gelagerte Walze ausgebildet ist (d.h. die Lagerentfernungen (LE) des drehbaren Mantels (51) und des feststehenden Joches (52) sind etwa gleich groß) und daß nur ein einziger Anpreßschuh (53-57) vorhanden ist, der sich im wesentlichen entlang dem gesamten Walzenmantel (51) erstreckt (Fig. 6).

16. Durchbiegungsausgleichswalze nach einem der Ansprüche 1 bis 14, dadurch gekennzeichnet, daß sie als eine selbstanpressende Walze ausgebildet ist (d.h. der Walzenmantel (81) ist relativ zum Joch (82) radial verschiebbar) und daß mehrere längliche, in einer Reihe angeordnete Anpreßschuhe (83) vorhanden sind, deren Druckräume mit unterschiedlichen Drücken beaufschlagbar sind Fig. (7).

## Claims

1. A sag-compensating roller, in particular for paper machines, with the following features:
a) a stationary yoke (2) extends through the interior of a rotatable roller casing (1);
b) at least one oblong press-on shoe (8; 33; 53-57), which extends parallel to the roller axis and the outside contour of which is matched to the inside surface of the roller casing and which is movable radially to the yoke and tiltable around its longitudinal axis, is located between the roller casing (1) ) and the yoke (2);
c) the press-on shoe has hydrostatic pressure pockets (11, 12) in its outside contour for the purpose of transferring a pressure load from the roller casing (1) to the yoke (2); furthermore, a pressure area (6; 45; 62) is provided between the press-on shoe and the yoke;
**characterized by** the following features:
d) the operational width (K) of the pressure area (6; 45; 62) is at least 0.2 times the inside diameter of the roller casing (1);
e) the overall width (B) of the press-on shoe (8; 33; 53-57) is maximum 1.3 times the operational width (K) of the pressure area;
f) the bottom side of the press-on shoe (8; 33; 53-57) which is oriented towards the yoke (2) is hydraulically supported;
g) the longitudinal webs (9, 10) which define the pressure pockets (11, 12) have a width (a, b) of maximum 1/20 of the operational width (K) of the pressure area (6; 45; 62).

2. A sag-compensating roller according to claim 1, **characterized in that** the operational width (K) of the pressure area (6; 45; 62) is between 0.25 and 0.5 times the inside diameter of the roller casing (1).

3. A sag-compensating roller according to claim 1 or 2, **characterized in that** the width (a, b) of the longitudinal webs (9, 10) is between 1130 and 1/100 of the width (K) of the pressure area (6; 45; 62).

4. A sag-compensating roller according to claim 1, 2 or 3, **characterized by** the following features:
a) the press-on shoe (8) is connected by means of a hinged ledge (7) to a separate piston (4) which defines the pressure area (6) towards the remaining inner area of the roller;
b) an intermediate space (13), which is sealed from the remaining inner area of the roller and the inside pressure of which is virtually the same as that in the pressure area, is present between the press-on shoe (8) and the piston (4).

5. A sag-compensating roller according to claim 1, 2 or 3, **characterized in that** the press-on shoe (33) is also designed as a piston, which defines the pressure area (45) towards the remaining roller inside area and which is tiltable around an imaginary longitudinal axis in the pressure area (45).

6. A sag-compensating roller according to one of claims 1 to 5, **characterized in that** on both sides of a central chamber (12), which is essentially of machine width, are arranged narrow pressure pockets (11) of machine width which are supplied with oil via capillaries (21).

7. A sag-compensating roller according to claim 6, **characterized in that** the width (b) of the outer webs (10) between pressure pockets (11) and roller inside area is larger than the width (a) of the inner webs (9) between pressure pockets (11) and central chamber (12).

8. A sag-compensating roller according to claim 7, **characterized** **in that** the outer webs (10) are approximately twice as wide as the inner webs (9).

9. A sag-compensating roller according to one of claims 1 to 8, **characterized in that** pressure pockets which are supplied with oil via capillaries (67) are also present at the ends.

10. A sag-compensating roller according to one of claims 1 to 9, **characterized in that** the press-on shoe (8; 33) comprises a predominantly plateshaped portion with a cross-sectional thickness/width ratio (T/B) of 0.15 to 0.33.

11. A sag-compensating roller according to one of claims 1 to 10, **characterized in that** ledges (36; 53) containing pressure pockets (37; 54) are bolted onto an elongated support element (33; 55)

12. A sag-compensating roller according to claim 11, **characterized in that** an insulating layer (38) is fitted between the ledges (36) and the support element (33).

13. A sag-compensating roller according to claim 11 or 12, **characterized in that** the support element (33; 55) is made of steel, and the ledges (36; 53) are made of a material with better slide properties than steel or cast iron.

14. A sag-compensating roller according to one of claims 1 to 13, **characterized in that** press-on means (for example springs 60) are provided which push the shoe (53-56), even in its unpressurized state, against the force of gravity towards the roller casing (51).

15. A sag-compensating roller according to one of claims 1 to 14, **characterized in that** it is designed as an equidistantly mounted roller (i.e. the mounting distances (LE) of the rotatable casing (51) and the stationary yoke (52) are approximately identical) and that there is only one single press-on shoe (53-57) which extends essentially along the entire roller casing (51) (Fig. 6).

16. A sag-compensating roller according to one of claims 1 to 14, **characterized in that** it is designed as a roller which presses itself on (i.e. the roller casing (81) is radially displaceable relative to the yoke (82)), and that a plurality of oblong press-on shoes (83) arranged in a row is provided, the pressure areas of which are loadable with different pressures (Fig. 7).

## Revendications

1. Cylindre de compensation de la flexion, notamment destiné aux machines à papier, avec les caractéristiques suivantes:
a) une pale fixe (2) s'étend au travers de l'intérieur du bandage d'un cylindre (1);
b) entre le bandage du cylindre (1) et la pale (2) se trouve au moins un patin de pressage (8; 33; 53-57) s'étendant en longueur et parallèlement à l'axe du cylindre dont le contour extérieur est ajusté sur la surface intérieure du bandage du cylindre et qui est mobile dans le sens radial par rapport à la pale et peut être basculé autour de son axe longitudinal;
c) pour transmettre une force de pressage du bandage du cylindre (1) sur la pale (2), le patin de pressage est muni de poches de pression hydrostatiques (11, 12) sur son contour extérieur ; en plus de cela, un espace de pressage (6; 45; 62) est prévu entre le patin de pressage et la pale;
caractérisé par les propriétés suivantes :
d) la largeur utile (K) de l'espace de pressage (6; 45; 62) est au moins égale à 0,2 fois le diamètre intérieur du bandage du cylindre (1);
e) la largeur totale (B) du patin de pressage (8; 33; 53-57) est égale au maximum à 1,3 fois la largeur utile (K) de l'espace de pressage;
f) le côté inférieur du patin de pressage (8; 33; 53-57) adjacent à la pale (2) est supporté hydrauliquement;
g) les traverses longitudinales (9, 10) qui délimitent les poches de pression (11, 12) ont une largeur (a, b) égale au maximum à 1/20 de la largeur utile (K) de l'espace de pressage (6; 45; 62).

2. Cylindre de compensation de la flexion conforme à la revendication 1, caractérisé par le fait que la largeur utile (K) de l'espace de pressage (6; 45; 62) est comprise entre 0,25 et 0,5 fois le diamètre intérieur du bandage du cylindre (1).

3. Cylindre de compensation de la flexion conforme à la revendication 1 ou 2, caractérisé par le fait que la largeur (a, b) de la traverse longitudinale (9, 10) est comprise entre 1/30 et 1/100 de la largeur (K) de l'espace de pressage (6; 45; 62).

4. Cylindre de compensation de la flexion conforme à la revendication 1, 2 ou 3, caractérisé par les propriétés suivantes :
a) le patin de pressage (8) est relié à un piston séparé (4) au moyen d'une barre articulée (7), celui-ci délimitant l'espace de pressage (6) par rapport au restant de l'espace intérieur du cylindre ;
b) entre le patin de pressage (8) et le piston (4) se trouve un espace intermédiaire (13) fermé hermétiquement par rapport au restant de l'espace intérieur du cylindre et dans lequel règne au moins approximativement la même pression que dans l'espace de pressage (6).

5. Cylindre de compensation de la flexion conforme à la revendication 1, 2 ou 3, caractérisé par le fait que le patin de pressage (33) est configuré en même temps sous la forme d'un piston qui délimite l'espace de pressage (45) par rapport au restant de l'espace intérieur du cylindre et qui peut être basculé dans l'espace de pressage (45) selon un axe longitudinal imaginaire.

6. Cylindre de compensation de la flexion conforme à l'une des revendications 1 à 5, caractérisé par le fait que des deux côtés d'une chambre centrale (12) dans la largeur principale de la machine sont disposées, sur la largeur de la machine, d'étroites poches de pression (11) alimentées en huile par des capillaires (21).

7. Cylindre de compensation de la flexion conforme à la revendication 6, caractérisé par le fait que la largeur (b) de la traverse extérieure (10) est plus grande entre les poches de pression (11) et l'espace intérieur du cylindre que la largeur (a) de la traverse intérieure (9) entre les poches de pression (11) et la chambre centrale (12).

8. Cylindre de compensation de la flexion conforme à la revendication 7, caractérisé par le fait que la traverse extérieure (10) est environ deux fois plus large que la traverse intérieure (9).

9. Cylindre de compensation de la flexion conforme à l'une des revendications 1 à 8, caractérisé par le fait que des poches de pression (68) alimentées en huile par des capillaires (67) sont également prévues sur les parties frontales.

10. Cylindre de compensation de la flexion conforme à l'une des revendications 1 à 9, caractérisé par le fait que le patin de pressage (8; 33) présente une partie essentiellement en forme de plateau avec un rapport épaisseur - largeur (T/B), vue en section, compris entre 0,15 et 0,33.

11. Cylindre de compensation de la flexion conforme à l'une des revendications 1 à 10, caractérisé par le fait que les barres (36 ; 53) contenant des poches de pression (37 ; 54) sont vissées sur un corps porteur (33; 55) longitudinal.

12. Cylindre de compensation de la flexion conforme à la revendication 11, caractérisé par le fait qu'une couche isolante (38) est intégrée entre les traverses (36) et le corps porteur (33).

13. Cylindre de compensation de la flexion conforme à la revendication 11 ou 12, caractérisé par le fait que le corps porteur (33 ; 55) est réalisé en acier et que les traverses (36 ; 53) sont composées d'un matériau ayant de meilleures propriétés coulissantes que l'acier ou la fonte.

14. Cylindre de compensation de la flexion conforme à l'une des revendications 1 à 13, caractérisé par le fait que sont prévus des moyens de pressage (par exemple ressorts 60) qui pressent le patin (53-56) contre le bandage du cylindre (51), même lorsqu'il est relâché par rapport à la force de la gravité.

15. Cylindre de compensation de la flexion conforme à l'une des revendications 1 à 14, caractérisé par le fait qu'il est réalisé sous la forme d'un cylindre monté sur paliers équidistants (c'est à dire que les écarts entre les paliers (LE) du bandage rotatif (51) et la pale fixe (52) sont approximativement identiques) et qu'il n'existe qu'un seul patin de pressage (53-57) qui s'étend essentiellement le long de tout le bandage du cylindre (51) (figure 6).

16. Cylindre de compensation de la flexion conforme à l'une des revendications 1 à 14, caractérisé par le fait qu'il est réalisé sous la forme d'un cylindre auto-presseur (c'est à dire que la bandage du cylindre (81) peut être coulissé dans le sens radial par rapport à la pale (82)) et qu'il existe plusieurs patins de pressage (83) disposés en ligne dont les espaces de pressage peuvent être soumis à des pressions différentes (figure 7).
